Europäisches Patentamt

European Patent Office

Office européen des brevets

(19)

(11) **EP 1 391 876 A1**

(12) **EUROPEAN PATENT APPLICATION**

(43) Date of publication:
**25.02.2004 Bulletin 2004/09**

(51) Int Cl.[7]: **G10L 15/02**, G10L 17/00

(21) Application number: **02018386.9**

(22) Date of filing: **14.08.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Sony International (Europe) GmbH
10785 Berlin (DE)**

(72) Inventors:
• **Tato, Raquel,**
c/o Sony International (Europe) GmbH
70327 Stuttgart (DE)

• **Marasek, Krzysztof,**
c/o Sony International(Europe)
70327 Stuttgart (DE)
• **Santos, Rocio,**
c/o Sony International(Europe)GmbH
70327 Stuttgart (DE)

(74) Representative: **Müller - Hoffmann & Partner
Patentanwälte,
Innere Wiener Strasse 17
81667 München (DE)**

(54) **Method of determining phonemes in spoken utterances suitable for recognizing emotions using voice quality features**

(57) For appropriately determining specific phonemes in spoken utterances (U) or its positions, in particular suitable for the calculation of voice quality features needed for an improvement of emotion recognition systems, it is suggested to determine (S5, S6) average normalized formant differences ($\Delta$) between a first given formant (f1) and a second given formant (f2) for each voiced region (VRj) of a given received spoken utterance (U). Thereby a process of deriving (S6) phoneme indicating data (PIDj) is carried out for each voiced region (VRj). Additionally, a process of assigning (S7) phonemes to each of said voiced regions (VRj) is carried out based on said phoneme indicating data (PIDj).

SONY International (Europe) GmbH    File: 54.326

Fig. 1

Initialization / Start — S0

Receive and Pre-Process Spoken Utterance U — S1

Divide Utterance U into Frames Fk — S2

Determine Voiced Frames VFk — S3

Determine Voiced Regions VRj — S4

Determine Average Normalized Formant Differences $\Delta=\mathrm{mean}((f1\text{-}f2)/f1)$ — S5

Derive Phoneme Indicating Data PID — S6

Assign Phonemes to Voiced Regions — S7

EP 1 391 876 A1

**Description**

The present invention relates to a method for determining phonemes in a spoken utterance - and in particular phonemes which are suitable or relevant for emotion recognition - said method in particular being suitable for recognizing emotions as well as to a method for recognizing emotions from a spoken utterance, said methods in particular involving voice quality features. In particular, the present invention relates to a method for recognizing emotions from spoken utterances involving the evaluation of voice quality features, in particular on the mentioned suitable phonemes.

In the field of man-machine interface techniques, for instance for electronic or home appliances, methods for detecting emotions from spoken utterances become more and more important. One basic approach in methods for deriving emotions for spoken utterances is to evaluate properties of phonemes contained in said spoken utterances. Therefore, determining the phonemes and their positions within a given spoken utterance is a crucial point, as in particular the boundaries of detected phonemes and in particular of detected vowels strongly influences the result of the emotion detection.

It is an object of the present invention to provide a method for determining phonemes and in particular certain or relevant phonemes in a spoken utterance in particular without additional linguistic knowledge and to provide a method for recognizing emotions from spoken utterances, being capable of determining more accurately phonemes and in particular certain or relevant phonemes and their positions within a given utterance and to thereby calculate quality features more accurate and/or to increase the recognition rate in a process of recognizing emotions.

The object is achieved according to the invention with a method for determining phonemes and in particular certain or relevant phonemes in spoken utterances with the characterizing features of claim 1. Additionally, the object is achieved according to the invention by a method for recognizing emotions from spoken utterances with the characterizing features of claim 9. Further on, the object is achieved by a system for determining phonemes in a spoken utterance in particular suitable for recognizing emotions and/or for recognizing emotions from spoken utterance according to claim 15, by a computer program product according to claim 16, and by a computer readable storage medium according to claim 17, respectively.

First of all the method for determining phonemes in a spoken utterance - and in particular phonemes which are suitable or relevant for emotion recognition - in particular for emotion recognition according to the present invention comprises a process of receiving at least one spoken utterance. Further, a process of determining at least one voiced region within each of said at least one spoken utterances is provided. Further on, the process of determining average normalized formant differences between a first given formant and a second given formant for each of said at least one voiced regions is performed. Thereby, a process of deriving phoneme indicating data is carried out for each of said at least one voiced regions. Finally, a process of assigning phonemes and in particular certain or relevant phonemes to at least a part of said voiced regions based on said phoneme indicating data is carried out.

It is therefore a key idea of the present invention to determine average normalized formant differences between a first given formant and a second given formant for voiced regions contained in a received spoken utterance. Based on the determined average normalized formant differences between the given formants phoneme indicating data are derived. Based on said phoneme indicating data distinct phonemes are assigned to said voiced regions. This is not strictly accurate, but avoids the necessity of linguistic information, it is language independent.

It is preferred to use the first formant as said first given formant. Additionally or alternatively, the second formant is used as said second given formant.

It is of particular advantage to involve in the process of determining average normalized formant differences $\Delta$ a calculation according to then relation

$$\Delta = \mathrm{mean}\left(\frac{f1-f2}{f1}\right),$$

wherein $\Delta$ indicates the average normalized formant difference and f1 and f2 indicate the involved first and second given formants, respectively.

According to a further advantageous and preferred embodiment of the inventive method in the process of assigning phonemes a phoneme or vowel of /a/ is assigned to a given voiced region, if within said given voiced region the first and second given formants are comparable close to each other and is said first given formant is comparable high.

It is of further advantage to assign a phoneme or vowel of /a/ to a given voiced region VR of an utterance U if for said given voiced region VR the respective average normalized formant difference $\Delta$ differs from the minimum of all average formant differences $\Delta j$ for all voiced regions VRj of the utterance U by at most a given first threshold value

D1, i.e. if the relation

$$\min_{VRj \subset U}(\Delta j) \le \Delta \le \min_{VRj \subset U}(\Delta j) + D1$$

is fulfilled, wherein min indicates the minimum function taken for all voiced regions VRj of the utterance U.

Alternatively or additionally, it is of further advantage, if in the process of assigning phonemes a phoneme or vowel of /i/ is assigned to a given voiced region, if within said given voiced region said first and second given formants are comparable distant or if the distance between them is comparable large and if the first formant is comparable low.

Additionally or alternatively, it is of advantage if in the process of assigning phonemes a phoneme or vowel of /i/ is assigned to a given voiced region, if for said given voiced region VR the respective average normalized formant difference $\Delta$ differs from the maximum of all average formant differences $\Delta j$ of all voiced regions VRj of the utterance U by at most a given second threshold value D2, i.e. if the relation

$$\max_{VRj \subset U}(\Delta j) - D2 \le \Delta \le \max_{VRj \subset U}(\Delta j)$$

is fulfilled, wherein max indicates the maximum function taken for all voiced regions VRj of the utterance U.

It is further preferred according to an alternative embodiment of the inventive method to divide said at least one spoken utterance to frames.

Therefore, the inventive method is further improved, if a process of determining voiced frames is carried out for said frame of said received utterance.

According to another preferred embodiment of the present invention it is provided that in said process of determining said voiced frames frames are processed, evaluated and/or selected within said at least one spoken utterance with respect to comparable high amplitude values, with respect to relative low zero-crossing rates and/or with respect to high energy values.

It is preferred that the region of said at least one utterance is classified as being a voiced region, if it contains a number n of voiced frames which is larger than a given threshold number nO, in particular larger than three.

According to another aspect of the present invention a method for recognizing emotion from spoken utterances is provided, wherein properties of phonemes contained in said utterances are evaluated and/or in particular quality features are evaluated and/or used as input features for at least one classifier. The inventive method for recognizing emotions from spoken utterances is characterized in that phonemes and in particular certain or relevant phonemes are determined by the inventive method for determining phonemes in spoken utterances.

It is of advantage for the inventive method for recognizing emotions for spoken utterances to involve voice quality features and in particular selected voice quality features, and in particular to evaluate them on vowels and/or in particular to evaluate on vowels and/or in particular to use as feature vectors for training at least one classifier.

According to a further preferred embodiment of the inventive method for recognizing emotions from spoken utterances it is provided to evaluate voice quality features which involve a filtering process or an inverse filtering process on a phoneme of /a/ or on phonemes which are close to /a/ and/or which require a precise description of the signal constitution of harmonic and noise component with respect to a phoneme of /a/ or with respect to phonemes which are close to /a/, in particular most similar to an /a/ in terms of a formant structure.

Alternatively or additionally, it is provided to evaluate voice quality features which do not involve a filtering process on a phoneme of /i/ or on phonemes which are close to /i/ and/or which are easier to detect in unrounded vowels - those related to formant characteristics - with respect to a phoneme of /i/ or with respect to phonemes which are close to /i/, in particular most similar to an /i/ in terms of a formant structure.

According to a further advantageous embodiment of the inventive method for recognizing emotions from spoken utterances it is suggested - in particular in the case where a determination or calculation of voice quality features includes a concept of mean statistics - to derive and/or to select for a given type of voice quality feature q - in particular for a feature q defining for each voiced region the mean of the same feature of the voiced region - a first feature value vq1 which is representative for a given voiced region VRj having frames Fk by averaging for said voice quality feature q for all frames Fk the respective voice quality values qk within said voiced region VRj, i.e. by determining the value

$$vq1 := \operatorname*{mean}_{Fk \subset VRj}(qk) = \sum_{k=1}^{nk} qk / nk,$$

with qk being the feature value of the feature q in the k-th frame Fk of the voiced region VRj having nk frames.

According to a further preferred embodiment of the inventive method for recognizing emotions from spoken utterances it is suggested - in particular in the case where a determination or calculation of voice quality features includes a concept of mean statistics - to derive and/or to select for a given type of voice quality feature q - in particular for a feature q defining for each voiced region the mean of the same feature of the voiced region - a second feature value vq2 being representative for a given voiced region VRj having frames Fk by selecting as said second feature value vq2 the one single feature value qx which stems from a frame Fx within the voiced region VRj and which is closest to said first feature value vq1, i.e. for which the relation

$$vq2 := qx \Leftrightarrow |qx - vq1| = \min_{Fk \subset VRj}\{|qk - vq1|\}$$

is fulfilled, wherein vq2 denotes the second feature value, qx denotes the single feature value for the feature q, qk denote single feature values of k-th frame Fk.

It is a further aspect of the present invention to provide a system, device or apparatus for determining phonemes in a spoken utterance and in particular suitable for recognizing emotions from spoken utterances and/or for recognizing emotions from spoken utterances and which is in each case adapted to perform or to realize the inventive method for determining phonemes in a spoken utterance, a method for recognizing emotions in spoken utterances and/or the steps thereof.

As to a further aspect of the present invention is to provide a computer program product, comprising computer program means adapted to perform and/or to realize the inventive method for determining phonemes in a spoken utterance and in particular suitable for recognizing emotions from spoken utterances and/or for recognizing emotions in spoken utterances and/or the steps thereof, when it is executed on a computer, a digital signal processing means, and/or the like.

A further aspect of the present invention is to provide a computer readable storage medium, comprising the inventive computer program product.

These further aspects will be more elucidated taking reference to the following remarks:

The use of quality features for emotion recognition is improved. Therefore, automatic detection of vowels through the first and second formant position and the relation between them is further developed. Consequently, the automatic calculation of quality features in the appropriate vowels - in particular without any linguistic knowledge - is also improved.

The state and/or calculation of the art in emotion expression through speech claims the importance of voice quality features for analysis, classification and synthesis of emotional speech.

Many speech quality parameters, e.g. harmonic to noise ratio and spectral energy distribution, are more accurately calculated on sustained vowel (segments without formant movements), i.e. phonemes /a/. The reason is that in irregular phonation (e.g. creaky) and in all segments with steep F0 changes, the FFT is not precise enough to describe the signal constitution of harmonic and noise components, due to limited time/frequency resolution. Similar arguments show the convenience of this vowel for the calculation of quality parameters from the glottal excitation, which involve some inverse filtering, e.g. spectral tilt.

However, there are other quality effects, very much related with emotion expression, that are easier to detect in unrounded vowels, especially on the phoneme /i/, such as lip spreading (due, for example, to smiling) or vocal tract lengthening.

The variety of human emotion and affects can be represented in a two dimensional space. On dimension refers to activation or arousal and the other one to evaluation or pleasure.

Until now most of the classifiers make use of prosody features, which are easier to handle but give only information about the activation or arousal dimension of emotions. For some emotions such anger and joy the activation factor is not enough to differentiate them. It seems to be necessary to take into account the second dimension of the emotional space, that is the pleasure or evaluation dimension. Such dimension is very much influenced of quality features of speech, i.e. auditory features that arise from variation in the source signal and vocal tract properties, which are very speaker dependent.

The accurate and meaningful calculation of the quality features depends very much on the selection of the appropriate vowel, and therefore, on the automatic calculation of the position of this vowel in an utterance. Assuming the target of a language independent emotion classifier, automatic language independent way of vowel identification and feature extraction is needed.

Some quality features are vowel dependent, which makes it necessary to calculate them in similar regions across the utterances, so that their differences are more influenced by changes in the speaker's emotional state than by the nature of the vowel. Assuming the target of a language independent emotion classifier, an automatic vowel identification and feature extraction is designed as follows.

Voiced frames of speech are selected by means of high amplitude values, a relative low zero-crossing rate and large energy values. Regions containing more than three voiced frames are assumed to be voiced and therefore candidates to vowels.

Quality features which involve some inverse filtering, e.g. spectral tilt, and those which require a precise description of the signal constitution of harmonic and noise components, e.g. harmonic to noise ratio and spectral energy distribution, are calculated on the phoneme /a/, or close to /a/.

Quality effects that are easier to detect in unrounded vowels, such as lip spreading (due, for example, to smiling) or vocal tract lengthening, are calculated on the phoneme /i/, or close to /i/. These effects are mainly related to formant characteristics.

The difference in the position of the first and second formant (f1 and f2), normalized by the first formant position, is used as a value for detecting /a/ and /i/ phonemes. Very generally, phoneme /a/ has the first and second formant very close, and the first formant position very high; and phoneme /i/ exactly opposite, i.e. the distance between first and second formant is larger than for other vowels, and the first formant position is very low.

Assumed a selected voiced region from one utterance, the mean of the values f2-f1/f1, means(f2-f1/f1), is calculated for all the frames in the voiced region. For each utterance, the maximum and minimum of the values mean (f2-f1/f1), max/min/mean(f2-f1/f1), is computed and the corresponding voiced region is labelled as an /a/ or /i/ respectively. The quality features will be calculated in either of the two, following the previous criteria. These values are also used as features themselves.

For all calculation including the Mean statistics, this is defined as

$$mean1(f) := \frac{\sum_{nk} f_i}{nk},$$

wherein nk is the number of frames Fk inside a voiced region VRj of the utterance U and qk is the quality feature value of the quality feature q in the frame Fk.

This value mean1 is computed within the voiced region. Then, single values qk for every frame Fk in the voiced region VRj are checked. The one, which is closest to the computed mean 1, is considered as a mean2 or the mean of this voiced region VRj.

The goal of such modified computation is to select a value coming from the most representative part inside the voiced region, since the normal mean is negatively influenced by voiced region boundaries, which are maybe not any more part of the vowel. It was experimentally checked that the chosen frames match always the core of the vowel.

In the following the invention will be exemplified by taking reference to the accompanying figure.

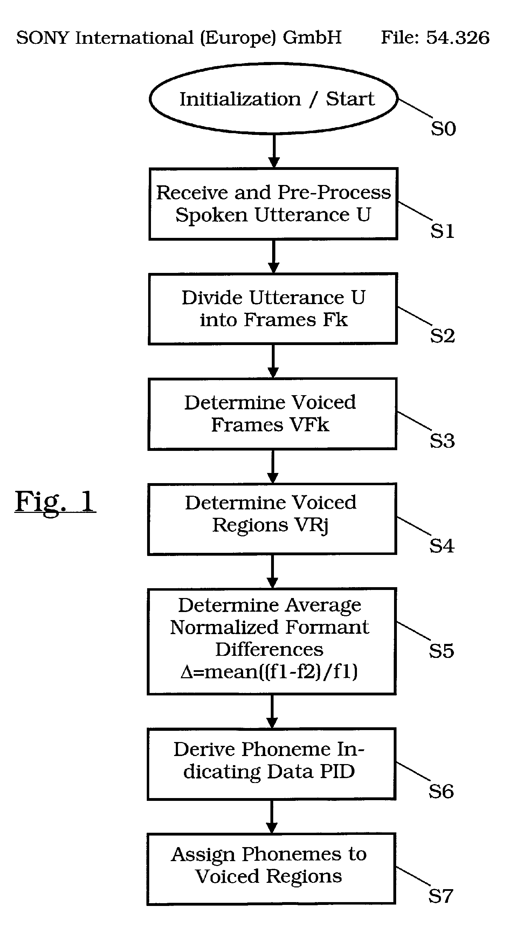

**Fig. 1** is a schematic flow chart of an embodiment of the inventive method for determining phonemes in a spoken utterance - and in particular certain or relevant phonemes suitable for the calculation of quality features for emotion recognition - according to the present invention.

The schematic block diagram of Fig. 1 shows a possible flow chart for an embodiment of the present invention, i.e. a method for determining phonemes in a spoken utterance and in particular certain or relevant phonemes suitable for the calculation of quality features for emotion recognition.

In a preliminary step S0 of the example shown in Fig. 1 the inventive method for determining phonemes - and in particular certain or relevant phonemes suitable for the calculation of quality features for emotion recognition - within a received spoken utterance is initialized and started. In a first step S1 a spoken utterance U is received and pre-processed. The received utterance U is divided into a sequence of frames Fk covering a received utterance U in step S2. In the following step S3 voiced frames VFk are determined within the sequence of frames Fj contained in the utterance U. In the following step S4 so-called voiced regions VRj are defined as regions of the utterance U which have a number n of voiced frames VFk which is larger than a given threshold number n0. In the following step S5 averaged normalized formant differences Δ are calculated for each of said voiced regions VRj. Based on the derived averaged normalized formant differences Δ of step S5 phoneme indicating data PIDj are derived in step S6 which are used to assign certain phonemes to the distinct voiced regions VRj in step S7. Then this procedure is ended and closed.

**Claims**

1. Method for determining specific phonemes in spoken utterances, comprising:

    - a process of receiving (S1) at least one spoken utterance (U),
    - a process of determining (S2, S3, S4) at least one voiced region (VRj) within each of said at least one spoken utterances (U),
    - a process for determining (S5, S6) average normalized formant differences (Δ) between a first given formant (f1) and a second given formant (f2) for each of said at least one voiced regions (VRj),
    - thereby carrying out a process of deriving (S6) phoneme indicating data (PIDj) for each of said at least one voiced regions (VRj), and
    - a process of assigning (S7) phonemes (P) at least to a part of said at least one voiced regions (VRj) based on said phoneme indicating data (PIDj).

2. Method according to claim 1,
   wherein the first formant is used as said first given formant (f1).

3. Method according to anyone of the preceding claims,
   wherein the second formant is used as said second given formant (f2).

4. Method according to anyone of the preceding claims,
   wherein in the process of determining (S5, S6) average normalized formant differences (Δ) a calculation according to

$$\Delta = \mathrm{mean}\left(\frac{f1 - f2}{f1}\right)$$

   is involved with Δ indicating the average normalized formant difference and f1 and f2 indicating said first and second given formants, respectively.

5. Method according to claim 4,
   wherein in the process of assigning (S7) phonemes (P) a phoneme or vowel of /a/is assigned to a given voiced region (VRj) if within said given voiced region (VRj) the first and second given formants (f1, f2) are comparable closed to each other and if said first given formant (f1) is comparable high.

6. Method according to anyone of the claims 4 or 5,
   wherein in the process of assigning (S7) phonemes (P) a vowel of /a/ is assigned to a given voiced region (VR), if for said given voiced region (VR) the respective average normalized formant difference (Δ) differs from the minimum (min(Δj)) of all average normalized formant differences (Δj) for all voiced regions (VRj) by at most a given first threshold value (D1), i.e. if the relation

$$\min_{VRj \subset U}(\Delta j) \leq \Delta \leq \min_{VRj \subset U}(\Delta j) + D1$$

   is fulfilled, wherein Δ denotes the average normalized formant difference for the given voiced region VR, Δj denote the average normalized formant differences for the voiced regions VRj, D1 denotes said first threshold value, and min indicates the minimum function taken for all voiced regions VRj.

**7.** Method according to anyone of the claims 4 to 6,
wherein in the process of assigning (S7) phonemes (P) a phoneme or a vowel of /i/ is assigned to a given voiced region (VRj) if within said given voiced region (VRj) the distance between said first given formant (f1) and said second given formant (f2) is comparable large and a first given formant (f1) is comparable low.

**8.** Method according to anyone of the claims 4 to 7,
wherein in the process of assigning (S7) phonemes (P) a phoneme or a vowel of /i/ is assigned to a given voiced region (VR) if for said given voiced region (VR) the respective normalized average formant difference (Δ) differs from the maximum (max(Δj)) of all average normalized formant differences (Δj) for all voiced regions (VRj) by at most a given second threshold value (D2), i.e. if the relation

$$\max_{VRj \subset U}(\Delta j) - D2 \le \Delta \le \max_{VRj \subset U}(\Delta j)$$

is fulfilled, wherein Δ denotes the average normalized formant difference for the given voiced region VR, Δj denote the average normalized formant differences for the voiced regions VRj, D2 denotes said first threshold value, and max indicates the maximum function taken for all voiced regions VRj.

**9.** Method for recognizing emotions from spoken utterances,

- wherein properties of phonemes contained in utterances (U) and/or in particular quality features are evaluated and/or used as input features for at least one classifier and
- wherein phonemes and in particular certain or relevant phonemes are determined by a method according to anyone of the claims 1 to 12.

**10.** Method according to claim 9, wherein voice quality features (q) are involved and/or in particular are evaluated on vowels and/or in particular are used as feature vectors for training at least one classifier.

**11.** Method according to claim 10,
wherein voice quality features (q) involving a filtering process are evaluated on the phonemes of /a/ or on phonemes, which are close to /a/, in particular most similar to an /a/ in terms of a formant structure.

**12.** Method according to anyone of the claims 10 or 11,
wherein voice quality features (q) not involving a filtering process are evaluated on the phonemes of /i/ or on phonemes which are close to /i/, in particular most similar to an /i/ in terms of a formant structure.

**13.** Method according to anyone of the claims 9 to 12,
wherein - in particular in the case where a determination or calculation of voice quality features includes a concept of mean statistics - for a given type of voice quality feature (q) a first feature value (vq1) is derived being representative for a given voiced region (VRj) of an utterance (U) of frames (Fk) by averaging said voice quality features (q) for all frames (Fk) within said voiced region (VRj), i.e. by determining the value

$$vq1 := \underset{Fk \subset VRj}{mean}(qk) = \sum_{k=1}^{nk} qk / nk,$$

with qk being the feature value of the feature q in the k-th frame Fk of the voiced region VRj having nk frames.

**14.** Method according to claim 13,
wherein - in particular in the case where a determination or calculation of voice quality features includes a concept of mean statistics - for a given type of voice quality features (q) a second value (vq2) is derived being representative for a given voiced region (VR) of frames (Fk) by selecting as said second feature value (vq2) the one single feature value (qx) which stems from a certain frame (Fx) within the voiced region (VRj) and which is closest to the first feature value (vq1), i.e. for which the relation

$$vq2 := qx \Leftrightarrow |qx - vq1| = \min_{Fk \subset VRj} \{|qk - vq1|\}$$

is fulfilled, wherein vq2 denotes the second feature value, qx denotes the single feature value for the feature q, qk denote single feature values of k-th frame Fk.

**15.** System for recognizing emotions from spoken utterances,
which is capable of performing or realizing the method for determining phonemes and in particular certain or relevant phonemes in a spoken utterance according to anyone of the claims 1 to 8 and in particular suitable for recognizing emotions from spoken utterances or a method for recognizing emotions from spoken utterances according to anyone of the claims 13 to 18 and/or the steps thereof.

**16.** Computer program product,
comprising computer program means adapted to perform and/or to realize the method for determining phonemes and in particular certain or relevant phonemes in a spoken utterance according to anyone of the claims 1 to 8 and in particular suitable for recognizing emotions from spoken utterances, the method for recognizing emotions from spoken utterances according to anyone of the claims 9 to 14 and/or the steps thereof, when it is executed on a computer, a digital signal processing means, and/or the like.

**17.** Computer readable storage medium,
comprising a computer program product according to claim 16.

SONY International (Europe) GmbH       File: 54.326

$$\text{Initialization / Start} \quad \text{S0}$$

↓

Receive and Pre-Process
Spoken Utterance U            S1

↓

Divide Utterance U
into Frames Fk              S2

↓

Determine Voiced
Frames VFk                S3

↓

**Fig. 1**

Determine Voiced
Regions VRj               S4

↓

Determine Average
Normalized Formant
Differences                S5
$\Delta = \text{mean}((f1-f2)/f1)$

↓

Derive Phoneme In-
dicating Data PID           S6

↓

Assign Phonemes to
Voiced Regions             S7

**EP 1 391 876 A1**

**European Patent Office**

**EUROPEAN SEARCH REPORT**

Application Number

EP 02 01 8386

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | LOBANOV B ET AL: "SPEAKER AND CHANNEL-NORMALIZED SET OF FORMANT PARAMETERS FOR TELEPHONE SPEECH RECOGNITION" 6TH EUROPEAN CONFERENCE ON SPEECH COMMUNICATION AND TECHNOLOGY. EUROSPEECH '99. BUDAPEST, HUNGARY, SEPT. 5 - 9, 1999, EUROPEAN CONFERENCE ON SPEECH COMMUNICATION AND TECHNOLOGY. (EUROSPEECH), BONN: ESCA, DE, vol. 1 OF 6, 5 September 1999 (1999-09-05), pages 331-334, XP001076117 * abstract * * page 333, right-hand column, line 9 - line 32 * | 1-17 | G10L15/02 G10L17/00 |
| A | WO 95 27976 A (HAL TRUST L L C) 19 October 1995 (1995-10-19) * abstract; figure 2 * * page 13, line 8 - page 14, line 16; table 1 * * page 51, line 12 - line 29 * | 1-17 | |
| A | COWIE R ET AL: "Emotion recognition in human-computer interaction" IEEE SIGNAL PROCESSING MAGAZINE, IEEE INC. NEW YORK, US, vol. 18, no. 1, January 2001 (2001-01), pages 32-80, XP002191161 ISSN: 1053-5888 * page 56, left-hand column, line 14 - page 57, left-hand column, line 32 * | 9-17 | TECHNICAL FIELDS SEARCHED (Int.Cl.7) G10L |

The present search report has been drawn up for all claims

| Place of search | Date of completion of the search | Examiner |
|---|---|---|
| MUNICH | 9 January 2003 | Zimmermann, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10

**ANNEX TO THE EUROPEAN SEARCH REPORT
ON EUROPEAN PATENT APPLICATION NO.** EP 02 01 8386

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2003

| Patent document cited in search report | | Publication date | Patent family member(s) | | Publication date |
|---|---|---|---|---|---|
| WO 9527976 | A | 19-10-1995 | US | 5623609 A | 22-04-1997 |
| | | | AT | 181169 T | 15-06-1999 |
| | | | AU | 688894 B2 | 19-03-1998 |
| | | | AU | 2285095 A | 30-10-1995 |
| | | | CA | 2187639 A1 | 19-10-1995 |
| | | | DE | 69510197 D1 | 15-07-1999 |
| | | | EP | 0760150 A1 | 05-03-1997 |
| | | | JP | 10500783 T | 20-01-1998 |
| | | | WO | 9527976 A1 | 19-10-1995 |